# EUROPÄISCHE PATENTSCHRIFT

(11) **EP 0 383 723 B1**
(45) Veröffentlichungstag und Bekanntmachung des Hinweises auf die Patenterteilung: **22.09.1993**
(21) Anmeldenummer: 90810080.3
(22) Anmeldetag: 05.02.1990
(51) Int. Cl.: E21D 21/00

(54) **Verfahren, Verankerungsglied und Spannvorrichtung zum Spannen eines Stabes**
Method, anchoring element and tensioning device for tensioning a rod
Procédé, élément d'ancrage et dispositif de mise en tension d'une tige

(30) Priorität: 06.02.1989 CH 401/89
(43) Veröffentlichungstag der Anmeldung: 22.08.1990
(73) Patentinhaber: H. Weidmann AG, 8640 Rapperswil (CH)
(72) Erfinder: Isler, Erwin, CH-8640 Rapperswil (CH)
(74) Vertreter: Münch, Otto

(56) Entgegenhaltungen:
- EP-A- 0 094 908
- EP-A- 0 188 174
- FR-A- 1 327 230

## Beschreibung

Bei der Gesteinssicherung, z.B. im Tunnelbau oder im Bergbau werden Zuganker eingesetzt mit einem im Gestein verankerten Ankerstab, auf dessen freies Ende eine Mutter aufgeschraubt ist. Die Mutter stützt sich gegen eine Ankerplatte ab, die am Gestein anliegt. Bei Zugankern aus Stahl wird die Mutter üblicherweise mit einem Drehmomentschlüssel angezogen. Dieses Spannverfahren ist recht ungenau, weil das mit dem Schlüssel aufgebrachte Drehmoment relativ stark schwankt und Setzvorgänge der Ankerplatte die Stabspannung unkontrolliert reduzieren können.

Bei Zugankern aus faserverstärktem Kunststoff hat sich dieses Spannverfahren nicht bewährt, weil faserverstärkte Ankerstäbe nur eine geringe Torsionsfestigkeit haben.

Ein Verfahren gemäss Oberbegriff des Anspruchs 1 ist durch Vorbenutzung bekannt. Es handelt sich dabei um ein Verfahren zum Spannen von Zugankern aus faserverstärktem Kunststoff. Ein bekannter Zuganker zu diesem Zweck ist in der US-A-4 523 880 beschrieben. Er hat am freien Stabende ein sägezahnförmiges Gewinde, auf welches eine Mutter aufgeschraubt wird. Die Mutter stützt sich gegen eine Ankerplatte ab. Zum Spannen dieser Anker wird bisher eine Vorrichtung benützt, mit einer Hilfsmutter, die auf das freie Stabende ausserhalb der Mutter aufgeschraubt wird. Die Hilfsmutter ist im Gestell der Vorrichtung axial durch einen Hydraulikzylinder verschiebbar. Das Gestell hat ein Dreibein, welches gegen das Gestein ausserhalb der Ankerplatte abgestützt wird. Wenn der Zylinder beaufschlagt wird, spannt die Hilfsmutter den Ankerstab vor und die Mutter kann dann manuell gegen die Ankerplatte angezogen werden. Dieses Verfahren und diese Vorrichtung sind recht umständlich.

Ein Verfahren und eine Vorrichtung gemäss Oberbegriff der Ansprüche 1 und 8 ist ferner aus der FR-A-1 327 230 bekannt. Diese Vorrichtung ist ähnlich aufgebaut wie die oben beschriebene, stützt sich jedoch nicht am Gestein, sondern an der Ankerplatte ab. Es werden geschlitzte, radial federnde Stahlmuttern verwendet, die auf das Sägezahngewinde des Ankerstabes axial aufgeschoben werden können. Die Vorrichtung hat einen federnden Flansch, welcher die Mutter während des Spannens des Ankerstabes mitführt. Vor dem Absenken des Hydraulikdrucks der Vorrichtung hat allerdings die Mutter gegenüber der Ankerplatte ein umbestimmtes Spiel, so dass nach Entfernen der Vorrichtung die Vorspannung des Ankerstabes um ein unbestimmtes Mass gegenüber der eingestellten Vorspannkraft absinkt.

Der vorliegenden Erfindung liegt die Aufgabe zugrunde, das oben erwähnte bekannte Verfahren, das Verankerungsglied und die zugehörige Spannvorrichtung derart weiterzubilden, dass der Stab rasch und mit einer präzise einstellbaren Vorspannkraft gespannt werden kann. Diese Aufgabe wird durch die kennzeichnenden Merkmale der Ansprüche 1, 2 und 8 gelöst.

Nachfolgend wird ein Ausführungsbeispiel der Erfindung anhand der Zeichnungen erläutert. Darin zeigt:
Fig. 1 einen Axialschnitt durch eine Spannvorrichtung,
Fig. 2 einen Schnitt längs der Linie II-II in Fig. 1,
Fig. 3 einen Axialschnitt durch eine Mutter längs der Linie III-III in Fig. 4,
Fig. 4 und 5 die beiden Stirnansichten der Mutter nach Fig. 3 in Richtung der Pfeile IV und V in Fig. 3, und
Fig. 6 einen Querschnitt längs der Linie VI-VI in Fig. 3.

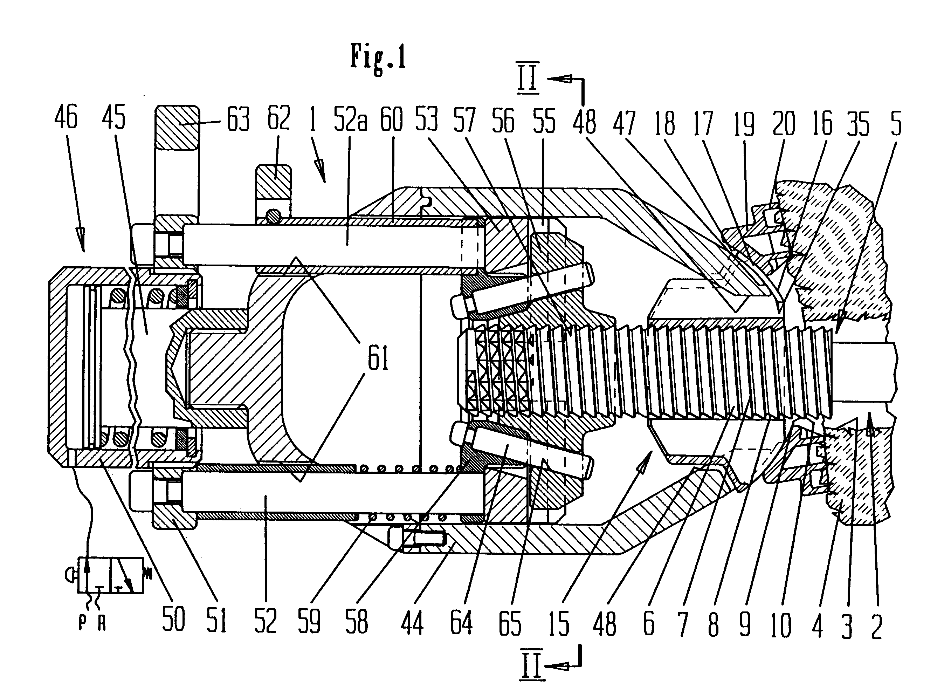

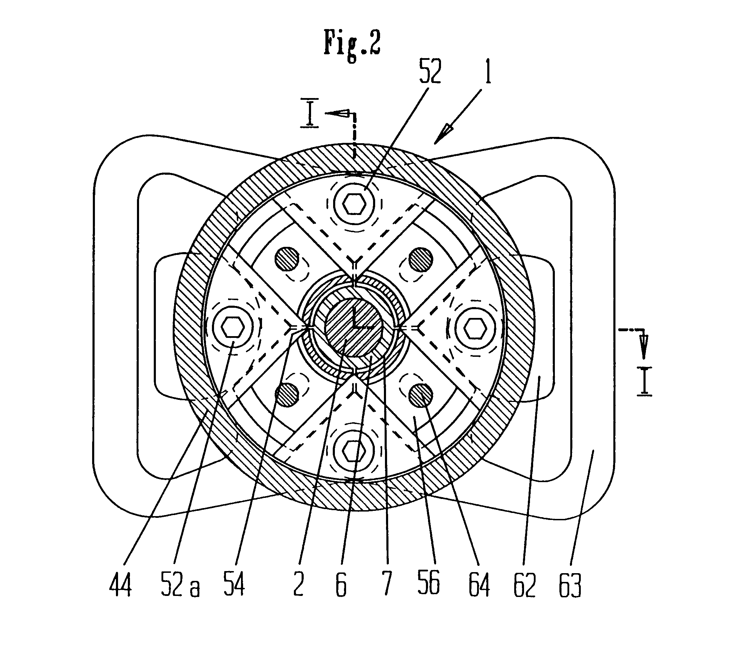

Die in Figuren 1 und 2 gezeigte Spannvorrichtung 1 dient zum Spannen eines faserverstärkten Kunststoff-Ankerstabes 2. Der Stab 2 ist in einem Bohrloch 3 im Gestein 4 dargestellt, wobei nur der Abschnitt 5 benachbart seinem freien Ende sichtbar ist. Am Verankerungsende kann er z.B. gemäss US-A-4 523 880 ausgebildet sein. Auf dem Endabschnitt 5 ist eine Hülse 6 aus faserverstärktem Kunststoff aufgegossen, welche am Aussenumfang ein Sägezahngewinde 7 hat. Die sägezahnförmigen Nuten 8 des Gewindes 7 haben dem freien Stabende zugewandt flache Flanken 9 und vom Stabende abgewandt steile Flanken 10.

Auf das Gewinde 7 ist eine als Verankerungsglied wirkende Mutter 15 aufgesetzt. Diese liegt mit einer konvex-sphärischen Aussenfläche 16 eines Endflansches 17 an einer konkav-sphärischen Fläche 18 einer Ankerplatte 19 an. Die Ankerplatte 19 stützt sich mit Knautschrippen 20 gegen das Gestein 4 ab.

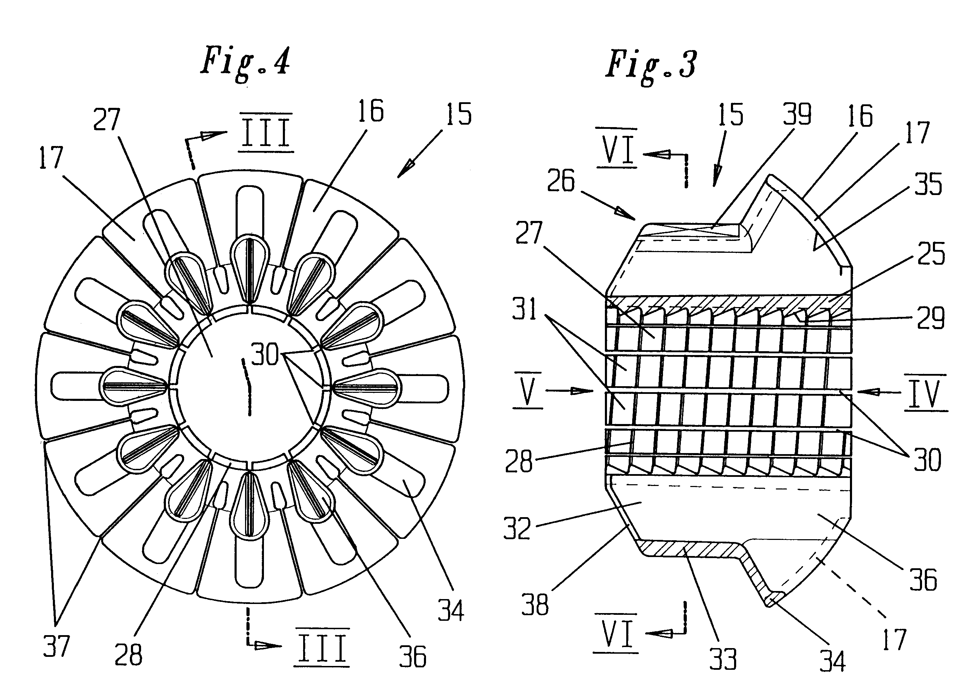

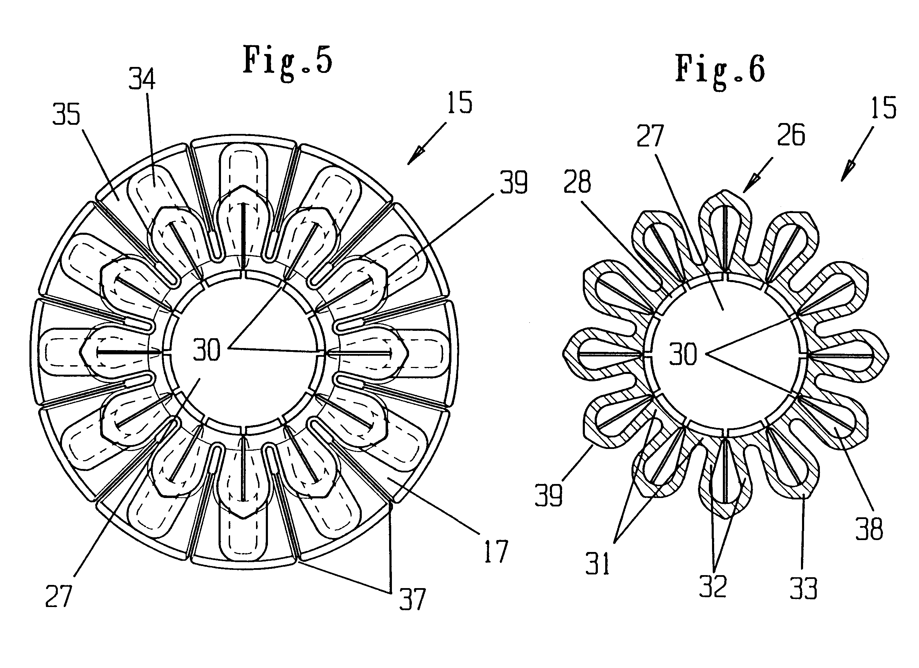

Die Mutter 15 ist in den Figuren 3 bis 6 detaillierter dargestellt. Sie ist aus faserverstärktem Kunststoff spritzgegossen und besteht aus einem rohrförmigen Mutterkörper 25, daran angeformten Rippen 26 und dem Endflansch 17. In der axialen Durchgangsbohrung 27 des Körpers 25 ist ein Sägezahn-Muttergewinde 28 mit sägezahnförmigen Nuten 29 eingeformt, welche den Nuten 8 entsprechen. Der Körper 25 ist durch zwölf Längsschlitze 30 in zwölf Segmente 31 unterteilt. Die Rippen 26 sind im Querschnitt U-förmig ausgebildet mit radialgerichteten U-Schenkeln 32 und einem etwa dachförmigen Verbindungsabschnitt 33. Die Rippen 26 sind biegeelastisch und verbinden die Segmente 31 miteinander, so dass diese tangential relativ zueinander federn können, radial gegenüber den Rippen 26 jedoch steif sind. Gegen den Flansch 17 hin gehen die Abschnitte 33 in halbzylinderförmige, geneigt zur Achse des Mutterkörpers 25 angeordnete Stege 34 über, welche die den Aussendurchmesser der Rippen 26 überragenden Aussenbereiche des Flansches 17 gegen die Rippen 26 abstützen. Die Abschnitte 33 bilden ein Doppelsechskant 39, damit die Mutter 15 auch mit einem Schlüssel angezogen oder allenfalls gelöst werden kann. Gegenüberliegend der sphärischen Aussenfläche 16 hat der Endflansch 17 eine konkav-sphärische Innenfläche 35. Der von den Schenkeln 32, dem Abschnitt 33 und dem Steg 34 umschlossene Raum erstreckt sich als Oeffnung 36 durch den Flansch 17 hindurch, so dass im Endflansch 17 die Schlitze 30 bis an die Innenwand der Stege 34 reichen. Zwischen den Rippen 26 hat der Endflansch 17 radiale Einschnitte 37, die sich bis zum Mutterkörper 25 erstrecken. Durch diese Ausbildung wird die Biegeelastizität der Rippen 26 und Stege 34 durch den Flansch 17 nicht beeinträchtigt. Am gegenüberliegenden Ende ist der von den Rippen 26 eingeschlossene Raum durch Böden 38 abgeschlossen. Die Schlitze 30 erstrecken sich in diesen Böden wiederum radial bis zur Innenwand der Abschnitte 33.

Gemäss Fig. 1 hat die Spannvorrichtung 1 ein Gehäuse 44. Das Gehäuse 44 ist am hinteren axialen Ende mit einer Kolbenstange 45 eines einfach wirkenden Hydraulikzylinderaggregates 46 verschraubt. Vorn hat das Gehäuse 44 eine konvex-ballige Stirnfläche 47 zur Anlage an der konkav-sphärischen Innenfläche 35 des Flansches 17 und eine axiale Oeffnung 48 zum Umgreifen der Rippen 26. Die Stirnfläche 47 wirkt als Abstützelement zur Abstützung der Spannvorrichtung 1 an der Mutter 15. Auf das vordere Ende des Zylinders 50 des Zylinderaggregates 46 ist ein Ring 51 aufgeschraubt. Dieser trägt vier achsparallele Stangen 52. Am vorderen Ende der Stangen 52 ist ein Träger 53 mit einer Durchgangsbohrung 54 zum Durchführen der Hülse 6 festgeschraubt. Die vordere Stirnfläche des Trägers 53 hat vier radial verlaufende T-Nuten 55. In diesen Nuten 55 sind vier Backen 56 radial beweglich geführt. Die Backen 56 haben sägezahnförmige Mutter-Gewindenuten 57 zum Eingriff in die Gewindenuten 8 des Stabes 2. Auf der Rückseite des Trägers 53 ist ein koaxialer Betätigungsring 58 auf den Stangen 52 axial verschiebbar geführt und durch Druckfedern 59 gegen den Träger 53 vorbelastet. Auf zwei der Stangen 52a ist je eine Hülse 60 verschiebbar. Die Hülsen 60 sind starr mit dem Ring 58 verbunden und ragen rückwärts durch eine Bohrung 61 des Gehäuses 44. Am hinteren Ende der Hülsen 60 ist je ein Betätigungsgriff 62 befestigt. Dieser ist benachbart einem am Ring 51 angeformten Handgriff 63. Im Betätigungsring 58 sind vier Stifte 64 schief zur Achse des Gehäuses 44 befestigt. Die Stifte 64 durchdringen Bohrungen 65 in den Backen 56. Sie sind in Fig. 1 um 45° versetzt dargestellt.

Im Betrieb arbeitet die dargestellte Vorrichtung wie folgt: Nach dem Setzen des Ankerstabes 2 im Bohrloch 3 wird die Ankerplatte 19 gegen das Gestein 4 angelegt und die Mutter 15 zur Anlage gegen die Ankerplatte 19 auf die Hülse 6 aufgeschoben, wobei wegen der tangential federnden Segmente 31 die Mutter 15 nur axial aufgesteckt zu werden braucht, was sehr viel rascher geht als das Schrauben. Nun wird die Spannvorrichtung 1 am Handgriff 63 gefasst und gleichzeitig der Betätigungsgriff 62 zurückgezogen. Damit verschiebt sich der Ring 58 entgegen der Kraft der Federn 59 vom Träger 53 weg und die Stifte 64 verschieben die Backen 56 radial nach aussen, so dass die Vorrichtung 1 über die Hülse 6 weg bis zur Anlage der Stirnfläche 47 an der Innenfläche 35 aufgesetzt werden kann. Beim loslassen des Betätigungsgriffes 62 wird der Ring 58 durch die Federn 59 nach vorn gedrückt und die Stifte 64 drücken die Backen 56 radial einwärts zum Eingriff der Backennuten 57 mit den Stabnuten 8. Nun wird das Zylinderaggregat 46 mit Drucköl beaufschlagt. Die Kolbenstange 45 stösst das Gehäuse 44 und damit die Stirnfläche 47 nach vorn und der Zylinder 50 zieht über die Stangen 52 und den Träger 53 die Backen 56 nach hinten. Damit wird der Stab 2 gespannt und gleichzeitig mit der Gegenkraft die Mutter 15 zur Anlage gegen die Ankerplatte 19 gepresst, wobei wiederum durch die tangentiale Federung der Segmente 31 die Gewindenuten 8 der Hülse 6 übersprungen werden. Die ballige Stirnfläche 47 unterstützt das Spreizen der Mutter 15. Weil mit der vollen Vorspannkraft des Stabes 2 während des Vorspannes auch die Mutter 15 gegen die Ankerplatte 19 angepresst wird, setzt sich diese mit ihren Knautschrippen 20 fest gegen das Gestein 4 ab, so dass beim Entspannen des Zylinderaggregates 46 eine präzise, durch den eingestellten Hydraulikdruck exakt dosierbare Stabvorspannung erreicht ist. Nach dem Entspannen des Zylinderaggregates 46 werden durch Zug am Betätigungsgriff 62 die Backen 56 geöffnet und die Spannvorrichtung 1 axial vom freien Stabende abgezogen. Durch die Radialkomponenten der Abstützkraft auf den Endflansch 17, welche durch die radial starren Rippen 26 direkt auf die Segmente 31 übertragen werden, werden die Segmente 31 radial komprimiert und damit das Muttergewinde 28 fest in Eingriff mit dem Stabgewinde gehalten. Ausserdem wird durch diese radiale Kompression die Kraftübertragung von der Hülse 6 auf den Ankerstab 2 erheblich verbessert.

Die beschriebene Spannvorrichtung 1 und Mutter 15 ermöglichen ein äusserst rasches Spannen des Ankerstabes 2 mit einer gegenüber vorbekannten Ankerspannverfahren erheblich verbesserten Genauigkeit und Reproduzierbarkeit der Vorspannung. Damit kann die Festigkeit des Ankerstabes 2 optimal ausgenützt werden.

Das beschriebene Verankerungsglied (Mutter 15) und das beschriebene Spannverfahren eignen sich grundsätzlich auch, wenn die Stabnuten 8, die Verankerungsglied-Nuten 29 sowie die Backennuten 57 ringförmig sind und also keine Gewinde bilden. Für diesen Fall kommen auch andere als runde Stabquerschnitte in Frage.

## Patentansprüche

1. Verfahren zum Spannen eines Stabes (2) mit mehreren in gleichmässigem Abstand aneinandergereihten, sägezahnförmigen Nuten (8) an einem Stababschnitt (5) benachbart dem freien Stabende, wobei ein Zugelement (56) mit den Nuten (8) des Stababschnittes (5) in Eingriff gebracht, mit dem Zugelement (56) mittels einer Spannvorrichtung (1) der Stab (2) gespannt und ein in die Nuten (8) des Stababschnittes (5) eingreifendes Verankerungsglied (15) zur Anlage gegen eine Auflage (19) gebracht wird, worauf die Spannvorrichtung (1) entspannt und das Zugelement (56) entfernt wird, dadurch gekennzeichnet, dass beim Spannen des Stabes (2) die Spannvorrichtung (1) ausschliesslich gegen das Verankerungsglied (15) abgestützt und gleichzeitig mit dem Spannen des Stabes (2) das Verankerungsglied (15) gegen die Auflage (19) angepresst wird.

2. Verankerungsglied zur Durchführung des Verfahrens nach Anspruch 1, umfassend einen rohrförmigen Körper (25) mit sägezahnförmigen Nuten (29) in einer axialen Durchgangsöffnung (27) zum Eingriff mit sägezahnförmigen Nuten (8) eines Stabes (2), und mit radial abstehenden, sich in Achsrichtung erstreckenden, am Körper (25) angeformten Rippen (26), dadurch gekennzeichnet, dass der Körper (25) durch sich in Achsrichtung erstreckende Schlitze (30) in Segmente (31) unterteilt ist, und dass die Rippen (26) im Querschnitt U-förmig und biegeelastisch ausgebildet sind und die Segmente (31) miteinander verbinden, so dass die Segmente (31) tangential elastisch miteinander aber radial unelastisch mit den Rippen (26) verbunden sind.

3. Verankerungsglied nach Anspruch 2, dadurch gekennzeichnet, dass an den Rippen (26) am einen axialen Ende ein Endflansch (17) angeformt ist, dass sich die Schlitze (30) durch den Endflansch (17) erstrecken und in diesem bis annährend zur Innenwand der Rippen (26) ragen, und dass zwischen den Rippen (26) im Endflansch (17) von aussen radiale Einschnitte (37) gebildet sind, die bis in den Bereich des Körpers (25) ragen.

4. Verankerungsglied nach Anspruch 3, dadurch gekennzeichnet, dass sich der Endflansch (17) radial über den Aussendurchmesser der Rippen (26) erstreckt, dass er eine konvex-sphärische Aussenfläche (16) und eine konkav-sphärische Innenfläche (35) aufweist, und dass der Bereich des Endflansches (17) ausserhalb der Rippen (26) durch Stege (34) auf den Rippen (26) abgestützt ist.

5. Verankerungsglied nach einem der Ansprüche 2 bis 4, dadurch gekennzeichnet, dass die Nuten (29) des Körpers (25) wendelförmig sind und ein Muttergewinde (28) bilden.

6. Verankerungsglied nach Anspruch 5, dadurch gekennzeichnet, dass es zwölf Schlitze (30) und zwölf Rippen (26) aufweist, und dass alle Rippen (26) radial aussen einen im Querschnitt gesehen dachförmigen Abschnitt (33) aufweisen, wobei die Abschnitte (33) zusammen ein Doppelsechskant (39) bilden zum Eingriff eines Doppelsechskantschlüssels.

7. Verankerungsglied nach einem der Ansprüche 2 bis 6, dadurch gekennzeichnet, dass es aus faserverstärktem Kunststoff besteht.

8. Spannvorrichtung zur Durchführung des Verfahrens nach Anspruch 1, umfassend ein Gehäuse (44), an welchem ein Zugelement (56) mit sägezahnförmigen Nuten (57) zum Eingriff mit sägezahnförmigen Nuten (8) an einen Endabschnitt (5) benachbart dem freien Ende eines Stabes (2) in axialer Richtung verschiebbar ist, ein mit dem Gehäuse (44) verbundenes Abstützelement (47), sowie ein Betätigungsglied (46) zum Verschieben des Zugelementes (56) in Achsrichtung relativ zum Abstützelement (47), wobei das Abstützelement (47) eine koaxiale Oeffnung (48) zum Durchführen des Stabes (2) aufweist, dadurch gekennzeichnet, dass das Abstützelement (47) zur Abstützung ausschliesslich gegen ein auf den Stab (2) aufgesetztes Verankerungsglied (15) mit sägezahnförmigen Nuten (29) zum Eingriff mit den Nuten (8) des Stabes (2) ausgebildet ist.

9. Vorrichtung nach Anspruch 8, dadurch gekennzeichnet, dass das Zugelement durch mehrere Backen (56) gebildet ist, die aus einer Grundstellung in welcher ihre Nuten (57) mit den Nuten (8) des Stabes (2) in Eingriff bringbar sind, in eine radial ausgerückte Stellung um mindestens die radiale Tiefe ihrer Nuten (57) verschiebbar sind.

10. Vorrichtung nach Anspruch 8 oder 9, dadurch gekennzeichnet, dass das Abstützelement eine konvexballige Stirnfläche (47) des Gehäuses (44) zur Anlage an einer konkavsphärischen Innenfläche (35) eines Endflansches (17) des Verankerungsgliedes (15) ist.

## Claims

1. Method of tensioning a rod (2) having a plurality of saw-tooth-shaped grooves (8) aligned in a row with uniform spacing on a portion (5) of the rod adjacent to the free end of the latter, wherein a pull means (56) is brought into engagement with the grooves (8) on the rod portion (5), the rod (2) is tensioned by the pull means (56) with the aid of a tensioning device (1), and an anchoring member (15) engaging in the grooves (8) in the rod portion (5) is brought to bear against a support (19), whereupon the tensioning device (1) is released and the pull means (56) is removed, characterised in that during the tensioning of the rod (2) the tensioning device (1) is supported solely against the anchoring member (15) and that simultaneously with the tensioning of the rod (2) the anchoring member (15) is pressed against the support (19).

2. Anchoring member for applying the method according to Claim 1, comprising a tubular body (25) provided with saw-tooth-shaped grooves (29) in an axial through-opening (27) for engagement with saw-tooth-shaped grooves (8) of a rod (2), and provided with radially projecting ribs (26) formed on the body (25) and extending in the axial direction, characterised in that the body (25) is subdivided into segments (31) by slits (30) extending in the axial direction, and in that the ribs (26) have a U-shaped cross-section and a flexurally elastic construction and connect the segments (31) together, so that the segments (31) are tangentially connected together elastically but are radially connected inelastically to the ribs (26).

3. Anchoring member according to Claim 2, characterised in that at the one axial end an end flange (17) is formed on the ribs (26), in that the slits (30) extend through the end flange (17) and in the latter extend approximately to the inner wall of the ribs (26), and in that between the ribs (26) radial incisions (37) are formed from outside in the end flange (17) and extend into the region of the body (25).

4. Anchoring member according to Claim 3, characterised in that the end flange (17) extends radially over the outside diameter of the ribs (26), in that it has a convex spherical outer surface (16) and a concave spherical inner surface (35), and in that the region of the end flange (17) outside the ribs (26) is supported on the ribs (26) by webs (34).

5. Anchoring member according to one of Claims 2 to 4, characterised in that the grooves (29) in the body (25) are spiral and form a nut thread (28).

6. Anchoring member according to Claim 5, characterised in that it has twelve slits (30) and twelve ribs (26), and in that all the ribs have radially on the outside a portion (33) which is roof-shaped in cross-section, the portions (33) together forming a double hexagon (39) for engagement with a double hexagon spanner.

7. Anchoring member according to one of Claims 2 to 6, characterised in that it is made of fibre-reinforced plastics material.

8. Tensioning apparatus for applying the method according to Claim 1, comprising a casing (44), on which a pull means (56) having saw-tooth-shaped grooves (57) for engagement with saw-tooth-shaped grooves (8) on an end portion (5) adjacent to the free end of a rod (2) is displaceable in the axial direction; a support member (47) connected to the casing (44); and an actuating member (46) for displacing the pull means (56) in the axial direction relative to the support member (47), said support member (47) having a coaxial opening (48) for the passage of the rod (2), characterised in that the support member (47) is constructed for support solely against an anchoring member (15) disposed on the rod (2) and provided with saw-tooth-shaped grooves (29) for engagement with the grooves (8) of the rod (2).

9. Apparatus according to Claim 8, characterised in that the pull means is formed by a plurality of jaws (56), which out of a normal position, in which their grooves (57) can be brought into engagement with the grooves (8) of the rod (2), can be displaced a distance at least equal to the radial depth of their grooves (57) into a radially disengaged position.

10. Apparatus according to Claim 8 or 9, characterised in that the support member is a convex spherical end face (47) of the casing (44) for bearing against a concave spherical inner surface (35) of an end flange (17) of the anchoring member (15).

## Revendications

1. Procédé de mise en tension d'une tige (2) présentant, sur une partie de tige (5) voisine de l'extrémité libre de la tige, plusieurs rainures en dents de scie (8) qui se succèdent de façon équidistante, un élément de traction (56) étant amené en engagement avec les rainures (8) de la partie de tige (5), la tige (2) étant mise en tension par l'élément de traction (56) au moyen d'un dispositif tendeur (1), et un élément d'ancrage (15) s'engageant dans les rainures (8) de la partie de tige (5) étant amené en application contre un support (19), à la suite de quoi le dispositif tendeur (1) est détendu et l'élément de traction (56) déposé, **caractérisé** en ce que, lors de la mise en tension de la tige (2), le dispositif tendeur (1) s'appuie exclusivement contre l'élément d'ancrage (15), et l'élément d'ancrage (15) est pressé contre le support (19) en même temps que la tige (2) est mise en tension.

2. Elément d'ancrage pour la mise en oeuvre du procédé selon la revendication 1, comprenant un corps tubulaire (25) présentant des rainures en dents de scie (29) dans une ouverture traversante axiale (27) pour s'engager avec des rainures en dents de scie (8) d'une tige (2), et présentant des nervures (26) formées sur le corps (25), s'étendant en direction axiale et radialement saillantes, **caractérisé** en ce que le corps (25) est divisé en segments (31) par des fentes (30) s'étendant en direction axiale et en ce que les nervures (26) sont réalisées élastiques en flexion et à section en forme de U et relient entre eux les segments (31), de sorte que les segments (31) sont reliés de manière tangentiellement élastique entre eux, mais de manière radialement inélastique aux nervures (26).

3. Elément d'ancrage selon la revendication 2, **caractérisé** en ce qu'une bride terminale (17) est formée à une extrémité axiale des nervures (26), en ce que les fentes (30) s'étendent dans la bride terminale (17) et y pénètrent environ jusqu'à la paroi intérieure des nervures (26), et en ce que des entailles radiales (37), s'étendant jusque dans la région du corps (25), sont formées depuis l'extérieur entre les nervures (26) dans la bride terminale (17).

4. Elément d'ancrage selon la revendication 3, **caractérisé** en ce que la bride terminale (17) s'étend radialement au-delà du diamètre extérieur des nervures (26), en ce qu'elle présente une face extérieure sphérique convexe (16) et une face intérieure sphérique concave (35), et en ce que la région de la bride terminale (17) qui se trouve à l'extérieur des nervures (26) s'appuie sur ces dernières par des branches (34).

5. Elément d'ancrage selon l'une quelconque des revendications 2 à 4, **caractérisé** en ce que les rainures (29) du corps (25) sont hélicoïdales et constituent un filetage femelle (28).

6. Elément d'ancrage selon la revendication 5, **caractérisé** en ce qu'il présente douze fentes (30) et douze nervures (26), et en ce que toutes les nervures (26) présentent, radialement à l'extérieur, une partie (33) en forme de toit en coupe transversale, les parties (33) formant conjointement un profil douze pans pour l'engagement d'une clé douze pans.

7. Elément d'ancrage selon l'une quelconque des revendications 2 à 6, **caractérisé** en ce qu'il est réalisé en matière plastique renforcée par des fibres.

8. Dispositif tendeur pour la mise en oeuvre du procédé selon la revendication 1, comprenant un carter (44) sur lequel est mobile en translation axiale un élément de traction (56) présentant des rainures en dents de scie (57) pour s'engager avec des rainures en dents de scie (8) prévues sur une partie de tige (5) voisine de l'extrémité libre d'une tige (2), et comprenant un élément de soutien (47) assemblé au carter (44), ainsi qu'un organe d'actionnement (46) pour déplacer l'élément de traction (56) en translation axiale par rapport à l'élément de soutien (47), l'élément de soutien (47) présentant une ouverture coaxiale (48) pour le passage de la tige (2), **caractérisé** en ce que l'élément de soutien (47) est conçu pour un soutien exclusivement contre un élément d'ancrage (15), mis en place sur la tige (2) et présentant des rainures en dents de scie (29) pour s'engager avec les rainures (8) de la tige (2).

9. Dispositif selon la revendication 8, **caractérisé** en ce que l'élément de traction est constitué par plusieurs mâchoires (56) qui, à partir d'une position de base dans laquelle leurs rainures (57) peuvent être amenées en engagement avec les rainures (8) de la tige (2), peuvent être déplacées dans une position radialement écartée d'au moins la profondeur radiale de leurs rainures (57).

10. Dispositif selon la revendication 8 ou 9, **caractérisé** en ce que l'élément de soutien est une face frontale (47) à bombement convexe du carter (44), destinée à s'appliquer contre une face intérieure sphérique concave (35) d'une bride terminale (17) de l'élément d'ancrage (15).
